# EUROPEAN PATENT APPLICATION

(11) **EP 4 847 978 A1**
(43) Date of publication of application: **02.12.2026**
(21) Application number: 24920282.1
(22) Date of filing: 23.10.2024
(51) Int. Cl.: G02B 6/36

(54) **ALIGNMENT COMPONENT, ASSEMBLY COMPONENT, AND METHOD FOR MANUFACTURING OPTICAL CONNECTOR**

(30) Priority: 26.01.2024 JP 2024009858
(71) Applicant: Sumitomo Electric Optifrontier Co., Ltd., Yokohama-shi, Kanagawa 244-8589 (JP)
(72) Inventor: KITAHARA, Norihiko, Yokohama-shi, Kanagawa 244-8588 (JP)
(74) Representative: TBK
(86) International application number: PCT/JP2024/037729
(87) International publication number: WO 2025/158735

(57) **Abstract**

An alignment component includes a rear housing engagement part, a sleeve holding part, and a guide part. The rear housing engagement part engages with a rear housing into which an optical cord is inserted. The sleeve holding part holds a sleeve. A portion of the optical cord extending from the rear housing is inserted into the sleeve. The guide part is provided between the rear housing engagement part and the sleeve holding part, and guides the optical cord extending from the rear housing into the sleeve. The guide part has a tapered surface with which the optical cord comes into contact.

## Description

### Technical Field

The present disclosure relates to an alignment component, an assembly component, and a method for manufacturing an optical connector. This application claims priority to Japanese Patent Application No. 2024-009858, filed on January 26, 2024, the content of which is incorporated herein by reference.

### Background Art

An optical connector is composed of a plurality of components (for example, Patent Literature 1, Patent Literature 2, and Patent Literature 3). In the assembly of the optical connector, an optical cord is inserted into the plurality of components constituting the optical connector. The components constituting the optical connector include, for example, a rear housing and a sleeve.

### Citation List

### Patent Literature

[Patent Literature 1] Japanese Unexamined Patent Publication No. 2011-118348
[Patent Literature 2] Japanese Unexamined Patent Publication No. 2009-205100
[Patent Literature 3] Japanese Unexamined Patent Publication No. 2002-082257

### Summary of Invention

An alignment component according to one aspect of the present disclosure includes a rear housing engagement part, a sleeve holding part, and a guide part. The rear housing engagement part engages with a rear housing into which an optical cord is inserted. The sleeve holding part holds a sleeve. The portion of the optical cord extending from the rear housing is inserted into the sleeve. The guide part is provided between the rear housing engagement part and the sleeve holding part, and guides the optical cord extending from the rear housing into the sleeve. The guide part has a tapered surface with which the optical cord comes into contact.

### Brief Description of Drawings

FIG. 1A is a perspective view illustrating an optical connector according to an embodiment.
FIG. 1B is a perspective view illustrating the optical connector according to the embodiment.
FIG. 2 is an exploded perspective view of the optical connector shown in FIG. 1A.
FIG. 3 is a perspective view of an assembly component used for assembling the optical connector.
FIG. 4 is a cross-sectional view of the assembly component.
FIG. 5 is a plan view of the assembly component.
FIG. 6 is a perspective view of an alignment component.

### Description of Embodiments

### [Problems to be Solved by Present Disclosure]

When an optical cord is inserted into each component during the assembly of an optical connector, the tip of the optical cord may be caught on the component, and workability may be reduced. The optical cord may also develop a bend or curl during storage state of the optical cord. In this case, inserting the optical cord into each component becomes even more difficult.

An object of the present disclosure is to provide an alignment component, an assembly component, and a method for manufacturing an optical connector capable of improving the ease of assembling an optical connector.

### [Advantageous Effects of the Present Disclosure]

According to the present disclosure, it is possible to provide an alignment component, an assembly component, and a method for manufacturing an optical connector capable of improving the ease of assembling an optical connector.

### [Description of embodiments of present disclosure]

First, embodiments of the present disclosure will be listed and described.
[1] An alignment component according to an embodiment of the present disclosure includes a rear housing engagement part, a sleeve holding part, and a guide part. The rear housing engagement part engages with a rear housing into which an optical cord is inserted. The sleeve holding part holds a sleeve. A portion of the optical cord extending from the rear housing is inserted into the sleeve. The guide part is provided between the rear housing engagement part and the sleeve holding part, and guides the optical cord extending from the rear housing into the sleeve. The guide part has a tapered surface with which the optical cord comes into contact.
   This alignment component is configured to include the rear housing engagement part, the sleeve holding part, and the guide part. In this case, in a state where both the rear housing and the sleeve are positioned, the optical cord can be easily inserted into the rear housing and the sleeve. Further, the guide part provided between the rear housing engagement part and the sleeve holding part has the tapered surface. Consequently, when the optical cord inserted into the rear housing is inserted into the sleeve, the tip of the optical cord can come into contact with the tapered surface and be guided into the sleeve. Therefore, the ease of assembling the optical connector can be improved.
[2] In the alignment component according to the above [1], the guide part may connect the rear housing engagement part and the sleeve holding part. The tapered surface may be inclined so that a normal to the tapered surface extends toward the rear housing engagement part. Thereby, the ease of inserting the optical cord can be further improved even in a case where the maximum width inside the sleeve is smaller than the maximum width inside the rear housing.
[3] In the alignment component according to the above [1] or [2], the guide part may include a hollow part. The hollow part may penetrate in a first direction in which the rear housing engagement part, the guide part, and the sleeve holding part are aligned. The tapered surface may form a surface that defines the hollow part. In this case, the ease of inserting the optical cord can be further improved.
[4] In the alignment component according to the above [3], the hollow part may be open in a direction perpendicular to the first direction and have an opening that allows the rear housing engagement part and the sleeve holding part to communicate with each other. In this case, the alignment component can be easily removed after the optical cord has been inserted into the rear housing and the sleeve. Therefore, the ease of assembling the optical connector can be further improved.
[5] In the alignment component according to any of the above [1] to [4], the sleeve holding part may hold the sleeve through a spring disposed along the outer circumference of the sleeve. In this case, the ease of removing the alignment component can be further improved.
[6] In the alignment component according to any of the above [1] to [5], the rear housing engagement part may include an insertion part which is inserted into the rear housing. The insertion part may be inserted into a space in the rear housing into which a front housing is inserted when the rear housing and the front housing are joined together. In this case, the ease of installing and removing the alignment component can be further improved. As a result, the ease of assembling the optical connector can be further improved.
[7] An assembly component according to an embodiment of the present disclosure includes the sleeve and the alignment component according to any of the above [1] to [6]. The sleeve holding part holds the sleeve in a state where a tip of the sleeve protrudes from the sleeve holding part. In this case, the ease of removing the alignment component can be further improved. As a result, the ease of assembling the optical connector can be further improved.
[8] A method for manufacturing an optical connector according to an embodiment of the present disclosure includes arranging a rear housing and a sleeve in an alignment component such that a guide part is interposed therebetween, and bringing an optical cord extending from the rear housing into contact with a tapered surface of the guide part to insert the optical cord into the sleeve. The alignment component holds the rear housing into which the optical cord is inserted and the sleeve into which a portion of the optical cord extending from the rear housing is inserted, and includes a guide part that guides the optical cord.
[9] The method for manufacturing an optical connector according to the above [8] may further include removing the alignment component from the sleeve and the rear housing after the optical cord has been inserted into the sleeve.

### [Details of embodiments of present disclosure]

Specific examples of embodiments of the present disclosure will be described below with reference to the drawings. The present invention is not limited to these examples. The scope of the present invention is defined by the claims, and it is intended to include all modifications within the meaning and the scope equivalent to the claims. The same elements will be denoted by the same reference signs in the description of the drawings, and duplicate description thereof will be omitted as appropriate.

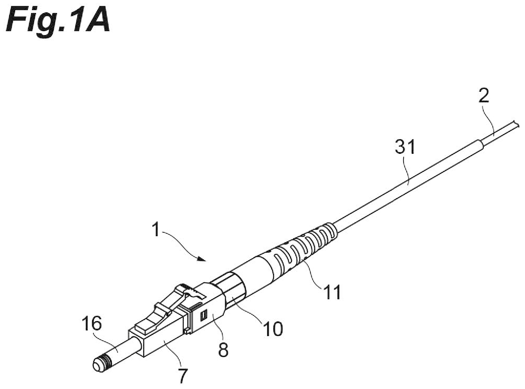

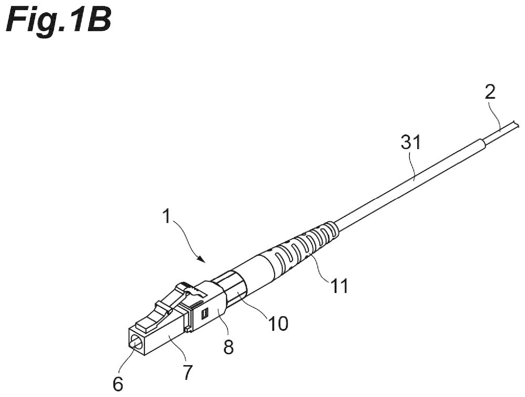

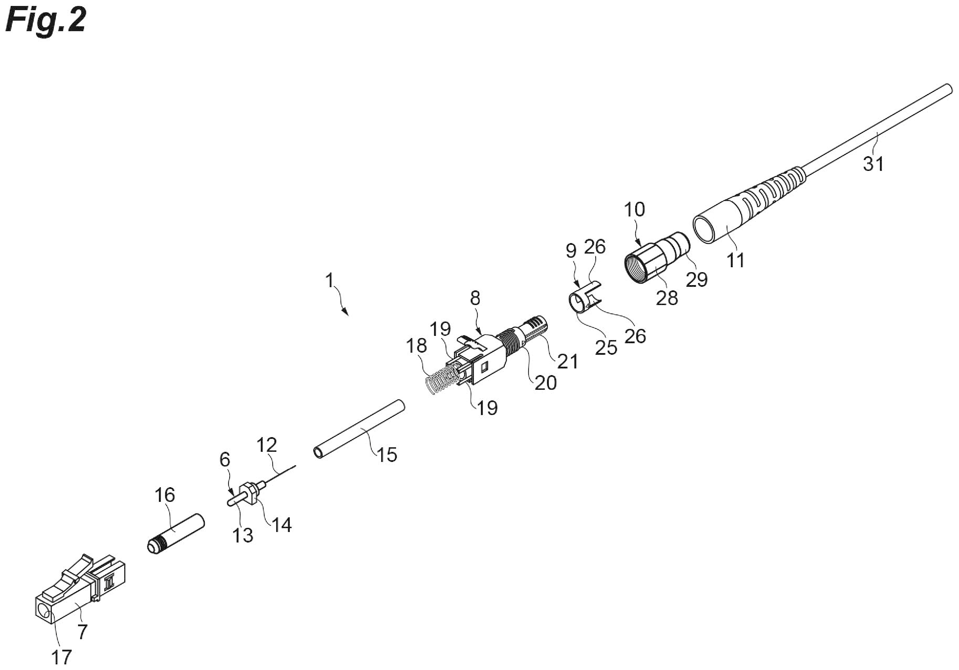

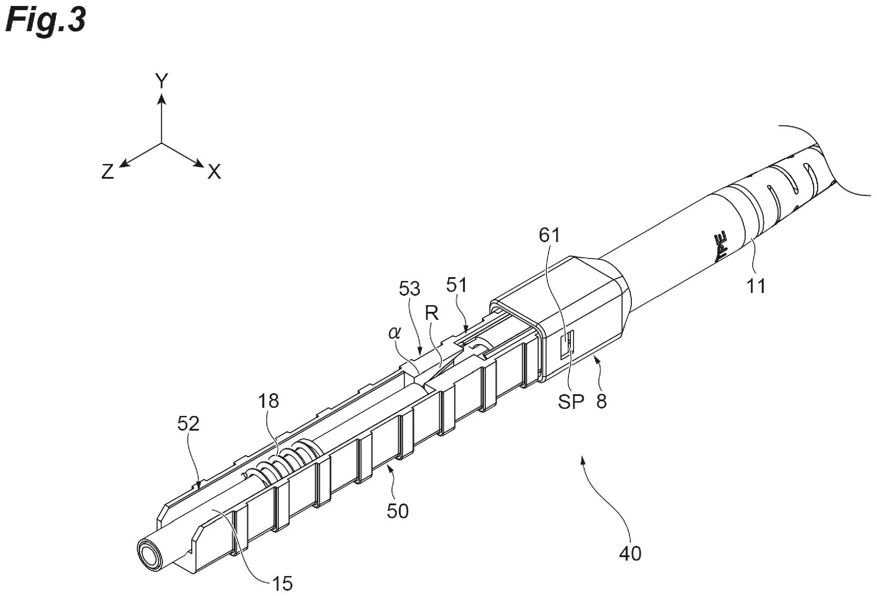

First, an alignment component and an assembly component according to the present embodiment will be described in more detail with reference to FIGS. 1A to 6. FIGS. 1A and 1B are perspective views illustrating an optical connector according to an embodiment. FIG. 2 is an exploded perspective view of the optical connector shown in FIG. 1A. FIG. 3 is a perspective view of an assembly component used for assembling the optical connector.

The optical connector 1 of the present embodiment is a fusion-spliced LC connector to which an optical cord 2 is assembled. The optical cord 2 has, for example, an optical fiber core wire, an outer sheath covering the optical fiber core wire, and tensile strength fibers. The tensile strength fibers are interposed between the optical fiber core wire and the outer sheath. The tensile strength fibers have an extremely small diameter. The tensile strength fibers are built into the optical cord in a bundled state.

The optical connector 1 includes a ferrule member 6, a front housing 7, a rear housing 8, an outer sheath retaining member 9, a fixing member 10, a boot 11, and a fusion protection sleeve 15. The front housing 7 houses the ferrule member 6. The rear housing 8 is disposed at the rear side of the front housing 7 and is connected to the front housing 7. The outer sheath retaining member 9 and the fixing member 10 are mounted on the rear housing 8. The boot 11 is attached to the fixing member 10.

The ferrule member 6 has a ferrule body 13 and a flange part 14. The ferrule body 13 holds a short-length built-in fiber 12. The flange part 14 is fixed to the ferrule body 13. The tip surface (front end surface) of the ferrule body 13 is polished so as to be inclined at a predetermined angle (for example, 8 degrees) with respect to a plane orthogonal to the longitudinal center axis of the built-in fiber 12.

The built-in fiber 12 extends a predetermined length backward from the ferrule member 6. The tip of the optical fiber core wire, which has been exposed by removing the outer sheath of the tip portion of the optical cord 2, is fusion-spliced to one end of the built-in fiber 12. The fusion protection sleeve 15 houses and protects the fusion-spliced connection between the built-in fiber 12 and the optical fiber core wire.

In a case where the optical connector 1 is not connected to a counterpart optical connector, a dust cap 16 for protecting the ferrule body 13 from dust, dirt, and the like is placed over the ferrule body 13. The dust cap 16 has a substantially cylindrical shape.

An insertion hole 17 extending in the front-to-back direction is formed in the front housing 7. The ferrule member 6 is inserted into the front housing 7 from the rear side of the front housing 7. A wall part for receiving the flange part 14 of the ferrule member 6 is provided on the inner wall surface of the front portion of the front housing 7. The diameter of the insertion hole 17 in the front portion of the front housing 7 is slightly larger than the outer diameter of the dust cap 16.

The rear housing 8 is connected to the rear end of the front housing 7 through a locking mechanism. An insertion hole extending in the front-to-back direction is formed in the rear housing 8. The fusion protection sleeve 15 is housed inside the front housing 7 and the rear housing 8. The optical cord 2 and the built-in fiber 12 are housed inside the fusion protection sleeve 15.

A spring 18 that biases the ferrule member 6 forward is in contact with the front end of the rear housing 8. The spring 18 is disposed in the ferrule housing space of the front housing 7. The spring 18 is formed in a helical shape and is disposed along the outer circumference of the fusion protection sleeve 15. By providing such a spring 18, it becomes possible to make a physical contact (PC) connection with a counterpart optical connector.

The rear housing 8 has a large cylindrical part 20 and a small cylindrical part 21 provided on the rear side of the large cylindrical part 20. The diameter of the small cylindrical part 21 is smaller than the diameter of the large cylindrical part 20. A male thread 22 is formed on the outer circumferential surface of the large cylindrical part 20.

The outer sheath retaining member 9 and the fixing member 10 are mounted on such a rear housing 8. The outer sheath retaining member 9 has an annular part 25 which is fitted into the small cylindrical part 21, and a pair of retaining arms 26 which are integrated with the annular part 25 and extend in the axial direction of the annular part 25.

The fixing member 10 is substantially cylindrical in shape. The fixing member 10 has a tensile strength fiber fixing part 28 and an outer sheath fixing part 29. The tensile strength fiber fixing part 28 fixes the tensile strength fibers of the optical cord 2 to the large cylindrical part 20 of the rear housing 8. The outer sheath fixing part 29 is provided at the rear side of the tensile strength fiber fixing part 28 and fixes the outer sheath 4 of the optical cord 2 to the small cylindrical part 21 of the rear housing 8 through each of the retaining arms 26. The above boot 11 is attached to the outer sheath fixing part 29. The boot 11 protects the optical cord 2 so that abrupt bending is not applied to the optical cord 2 at the rear side of the rear housing 8. A reinforcing tube 31 is attached to the boot 11 in advance.

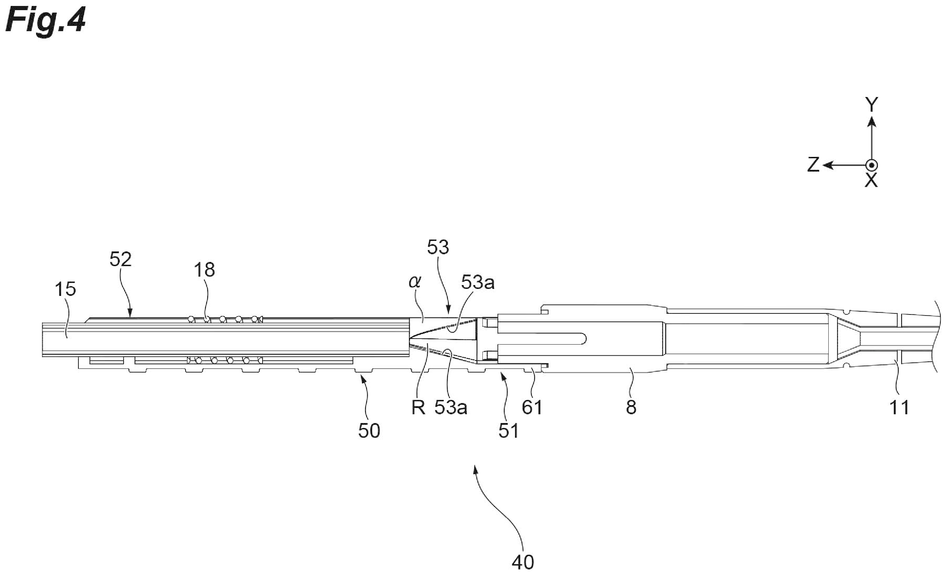

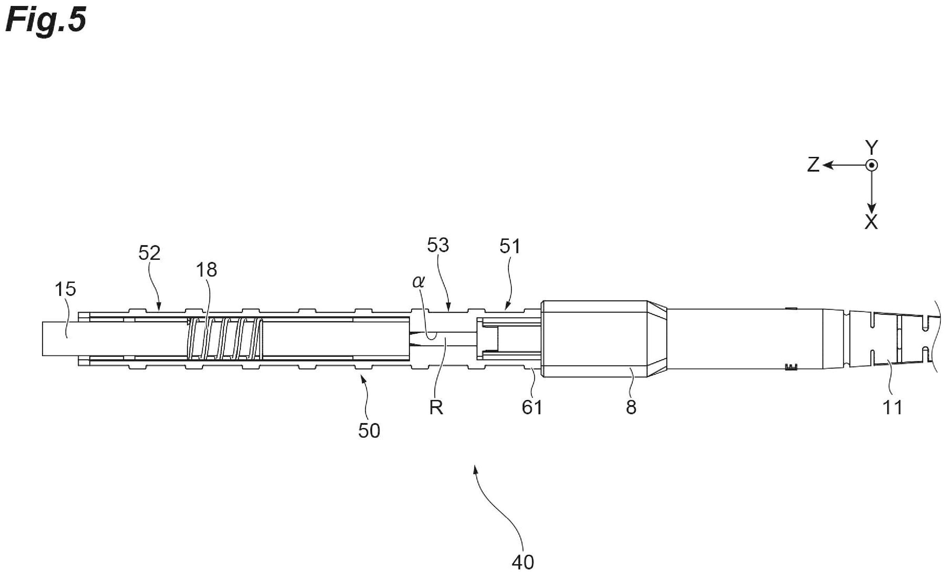

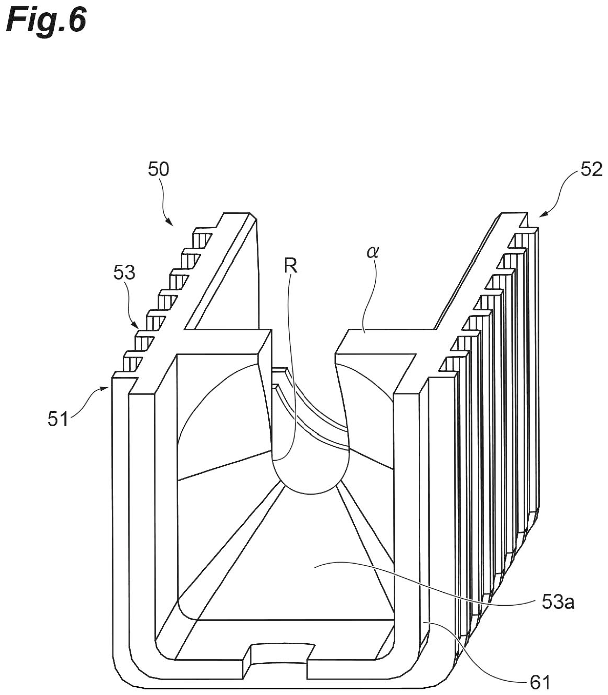

Next, the assembly of the optical connector 1 in the present embodiment will be described. FIG. 4 is a cross-sectional view of the assembly component, and FIG. 5 is a plan view of the assembly component. FIG. 6 is a perspective view of an alignment component. In the assembly of the optical connector 1, the optical cord 2 is inserted into the rear housing 8, the boot 11, and the fusion protection sleeve 15. In this case, the assembly component 40 is used. The assembly component 40 includes an alignment component 50 in addition to the rear housing 8, the boot 11, and the fusion protection sleeve 15. Hereinafter, the "fusion protection sleeve" will also be referred to simply as the "sleeve."

The alignment component 50 extends in the Z-axis direction. The alignment component 50 aligns the rear housing 8 and the sleeve 15 in a line in the Z-axis direction. The Z-axis direction is equivalent to a first direction. The alignment component 50 is open in the Y-axis direction orthogonal to the Z-axis direction. The alignment component 50 has a U-shape in a cross-section along the XY plane, and the U-shaped portion is continuous in the Z-axis direction.

The alignment component 50 includes a rear housing engagement part 51, a sleeve holding part 52, and a guide part 53. For example, the rear housing engagement part 51, the sleeve holding part 52, and the guide part 53 are integrally formed. The material of the alignment component 50 is, for example, plastic, and includes, for example, polycarbonate.

The rear housing engagement part 51 engages with the rear housing 8. The optical cord 2 is inserted into the rear housing 8. The rear housing engagement part 51 includes an insertion part 61 which is inserted into the rear housing 8. The insertion part 61 is inserted into a space SP in the rear housing 8. The front housing 7 is inserted into the space SP when the rear housing 8 and the front housing 7 are joined together.

The sleeve holding part 52 holds the sleeve 15. A portion of the optical cord 2 extending from the rear housing 8 is inserted into the sleeve 15. The sleeve holding part 52 holds the sleeve 15 through the spring 18. The spring 18 is formed in a helical shape and is disposed along the outer circumference of the sleeve 15 when the sleeve 15 is held by the sleeve holding part 52. The sleeve 15 is inserted into the spring 18.

In the example shown in the present embodiment, when the sleeve 15 is held by the sleeve holding part 52, a portion of the sleeve 15 in the Z-axis direction is housed within the alignment component 50. The sleeve 15 is held by the sleeve holding part 52 in a state where the tip of the sleeve 15 protrudes from the sleeve holding part 52. For example, the sleeve 15 is held by the sleeve holding part 52 in a state where the tip of the sleeve 15 protrudes from the alignment component 50. As a modification example of the present embodiment, the entirety of the sleeve 15 may be housed within the alignment component 50. For example, the entirety of the sleeve 15 may be held by the sleeve holding part 52. In the direction along the XY plane, the maximum width inside the sleeve 15 is smaller than the maximum width of the space SP.

The guide part 53 is provided between the rear housing engagement part 51 and the sleeve holding part 52. The rear housing engagement part 51, the guide part 53, and the sleeve holding part 52 are arranged in this order in the Z-axis direction. The guide part 53 guides the optical cord 2 extending from the rear housing 8 into the sleeve 15.

The guide part 53 has a tapered surface 53a. The guide part 53 connects the rear housing engagement part 51 and the sleeve holding part 52. The optical cord 2 comes into contact with the tapered surface 53a. The tapered surface 53a is inclined so that a normal to the tapered surface 53a extends toward the rear housing engagement part 51. In the example shown in the present embodiment, as shown in FIG. 6, the tapered surface 53a is formed to surround the optical cord 2 inserted into a hollow part R when viewed along the Z-axis direction. For example, when viewed in the Z-axis direction, that is, in a state of being projected onto a plane along the XY plane, the tapered surface 53a is formed to occupy a sector-shaped portion with a central angle of 180° or more, with the optical cord 2 inserted into the hollow part R as the center.

In the example shown in the present embodiment, the tapered surface 53a is composed of a plurality of planes arranged around the Z-axis direction. As a modification example of the present embodiment, the tapered surface 53a may be composed of at least one curved surface that curves around the Z-axis direction.

For example, the optical cord 2 is inserted into the rear housing 8 through the inside of the boot 11 and protrudes from the end side of the rear housing 8 where the space SP is located. The optical cord 2 protruding from the rear housing 8 comes into contact with the tapered surface 53a, is inserted into the hollow part R along the tapered surface 53a, and is inserted into the inside of the sleeve 15. In other words, the optical cord 2 slides along the tapered surface 53a and is guided into the inside of the sleeve 15.

For example, the guide part 53 has a hollow part R that penetrates the guide part 53 in the Z-axis direction. The tapered surface 53a forms a portion of the surface that defines the hollow part R. The hollow part R has an opening α. The opening α is open in the Y-axis direction and allows the rear housing engagement part 51 and the sleeve holding part 52 to communicate with each other.

After a portion of the optical cord 2 is housed in the sleeve 15, the alignment component 50 is removed from the sleeve 15 and the rear housing 8. At this time, for example, the alignment component 50 is removed by applying force in the Y-axis direction. Thereby, the optical cord 2, the sleeve 15, the spring 18, and the rear housing 8 are separated from the alignment component 50. At this time, the portion of the optical cord 2 which is located between the sleeve 15 and the rear housing 8 is separated from the alignment component 50 through the opening α.

Next, the operational effects obtained from the alignment component 50, the assembly component 40, and the method for manufacturing the optical connector 1 in the embodiment will be described.

The alignment component 50 includes the rear housing engagement part 51, the sleeve holding part 52, and the guide part 53. In this case, in a state where both the rear housing 8 and the sleeve 15 are positioned, the optical cord 2 can be easily inserted into the rear housing 8 and the sleeve 15. Further, the guide part provided between the rear housing engagement part 51 and the sleeve holding part 52 has the tapered surface 53a. Consequently, when the optical cord 2 inserted into the rear housing 8 is inserted into the sleeve 15, the tip of the optical cord 2 can come into contact with the tapered surface 53a and be guided into the sleeve 15. Therefore, the ease of assembling the optical connector 1 can be improved.

In the example shown in the present embodiment, the guide part 53 connects the rear housing engagement part 51 and the sleeve holding part 52. The tapered surface 53a is inclined so that the normal to the tapered surface 53a extends toward the rear housing engagement part 51. Thereby, the ease of inserting the optical cord 2 can be further improved even in a case where the maximum width inside the sleeve 15 is smaller than the maximum width inside the rear housing 8.

In the example shown in the present embodiment, the guide part 53 includes a hollow part R. The hollow part R penetrates in the Z-axis direction in which the rear housing engagement part 51, the guide part 53, and the sleeve holding part 52 are aligned. The tapered surface 53a forms a portion of the surface that defines the hollow part R. In this case, the ease of inserting the optical cord 2 can be further improved.

In the example shown in the present embodiment, the hollow part R is open in the Y-axis direction and has an opening α that allows the rear housing engagement part 51 and the sleeve holding part 52 to communicate with each other. In this case, the alignment component 50 can be easily removed after the optical cord 2 is inserted into the rear housing 8 and the sleeve 15. Therefore, the ease of assembling the optical connector 1 can be further improved.

In the example shown in the present embodiment, the sleeve holding part 52 holds the sleeve 15 through the spring 18 which is formed in a helical shape and disposed along the outer circumference of the sleeve 15. In this case, the ease of removing the alignment component 50 can be further improved.

In the example shown in the present embodiment, the rear housing engagement part 51 includes an insertion part 61 which is inserted into the rear housing 8. The insertion part 61 is inserted into the space SP in the rear housing 8 into which the front housing 7 is inserted when the rear housing 8 and the front housing 7 are joined together. In this case, the ease of installing and removing the alignment component 50 can be further improved. As a result, the ease of assembling the optical connector 1 can be further improved.

In the example shown in the embodiment of the present disclosure, the assembly component 40 includes the sleeve 15 and the alignment component 50 described above. The sleeve holding part 52 holds the sleeve 15 in a state where the tip of the sleeve 15 protrudes from the sleeve holding part 52. In this case, the ease of removing the alignment component 50 can be further improved. As a result, the ease of assembling the optical connector 1 can be further improved.

The method for manufacturing an optical connector includes arranging the rear housing 8 and the sleeve 15 in the alignment component 50 so as to interpose the guide part 53, and bringing the optical cord extending from the rear housing 8 into contact with the tapered surface 53a of the guide part 53 to insert the optical cord into the sleeve 15. The alignment component 50 holds the rear housing 8 into which the optical cord 2 is inserted and the sleeve 15 into which the portion of the optical cord 2 extending from the rear housing 8 is inserted, and includes the guide part 53 that guides the optical cord 2. The method may further include removing the alignment component 50 from the sleeve 15 and the rear housing 8 after the optical cord 2 has been inserted into the sleeve 15. In this case, the optical cord 2 can be easily inserted into the sleeve 15 and the rear housing 8, and a compact configuration for the entire optical connector can be realized.

While the embodiment of the present disclosure has been described in detail above, the present invention is not limited to the above-described embodiment and can be applied to various embodiments. In the above-described embodiments and modification examples, the alignment component 50 is fixed to the rear housing 8 by the insertion part 61 being inserted into the space SP. However, without being limited to this configuration, the alignment component 50 may be joined to the rear housing 8.

### Reference Signs List

1 Optical connector
2 Optical cord
4 Outer sheath
6 Ferrule member
7 Front housing
8 Rear housing
9 Outer sheath retaining member
10 Fixing member
11 Boot
12 Built-in fiber
13 Ferrule body
14 Flange part
15 Fusion protection sleeve
16 Dust cap
17 Insertion hole
18 Spring
20 Large cylindrical part
21 Small cylindrical part
22 Male thread
25 Annular part
26 Retaining arms
28 Tensile strength fiber fixing part
29 Outer sheath fixing part
31 Reinforcing tube
40 Assembly component
50 Alignment component
51 Rear housing engagement part
52 Sleeve holding part
53 Guide part
53a Tapered surface
61 Insertion part
R Hollow part
SP Space
α Opening

## Claims

1. An alignment component comprising:
a rear housing engagement part configured to engage with a rear housing into which an optical cord is inserted;
a sleeve holding part configured to hold a sleeve into which a portion of the optical cord extending from the rear housing is inserted; and
a guide part provided between the rear housing engagement part and the sleeve holding part and configured to guide the optical cord extending from the rear housing into the sleeve,
wherein the guide part has a tapered surface with which the optical cord comes into contact.

2. The alignment component according to claim 1, wherein the guide part connects the rear housing engagement part and the sleeve holding part, and
the tapered surface is inclined so that a normal to the tapered surface extends toward the rear housing engagement part.

3. The alignment component according to claim 1 or 2, wherein the guide part includes a hollow part that penetrates in a first direction in which the rear housing engagement part, the guide part, and the sleeve holding part are aligned, and
the tapered surface forms a surface that defines the hollow part.

4. The alignment component according to claim 3, wherein the hollow part is open in a direction perpendicular to the first direction and has an opening that allows the rear housing engagement part and the sleeve holding part to communicate with each other.

5. The alignment component according to any one of claims 1 to 4, wherein the sleeve holding part holds the sleeve through a spring disposed along an outer circumference of the sleeve.

6. The alignment component according to any one of claims 1 to 5, wherein the rear housing engagement part includes an insertion part which is inserted into the rear housing, and
the insertion part is inserted into a space in the rear housing into which a front housing is inserted when the rear housing and the front housing are joined together.

7. An assembly component comprising:
a sleeve; and
the alignment component according to any one of claims 1 to 6,
wherein the sleeve holding part holds the sleeve in a state where a tip of the sleeve protrudes from the sleeve holding part.

8. A method for manufacturing an optical connector, the method comprising:
arranging a rear housing into which an optical cord is inserted and a sleeve that houses a portion of the optical cord extending from the rear housing in an alignment component that holds the rear housing and includes a guide part that guides the optical cord, so as to interpose the guide part; and
bringing the optical cord extending from the rear housing into contact with a tapered surface of the guide part to insert the optical cord into the sleeve.

9. The method for manufacturing an optical connector according to claim 8, further comprising removing the alignment component from the sleeve and the rear housing after a portion of the optical cord has been housed in the sleeve.
